# EUROPÄISCHE PATENTSCHRIFT

(11) **EP 3 141 516 B1**
(45) Veröffentlichungstag und Bekanntmachung des Hinweises auf die Patenterteilung: **15.08.2018**
(21) Anmeldenummer: 16187544.8
(22) Anmeldetag: 07.09.2016
(51) Int. Cl.: B66C 1/66, F16B 45/00, F16G 15/08

(54) **ABSTÜTZANORDNUNG ZUM ABSTÜTZEN EINES ANSCHLAGPPUNKTES**
SUPPORT ASSEMBLY FOR SUPPORTING A STOP POINT
SYSTEME D'ETAYAGE D'UN POINT DE BUTEE

(30) Priorität: 08.09.2015 DE 202015104747 U
(43) Veröffentlichungstag der Anmeldung: 15.03.2017
(73) Patentinhaber: J.D. Theile GmbH & Co. KG, D-58239 Schwerte (DE)
(72) Erfinder: FALKE, Anja, D-58239 Schwerte (DE); FOITZIK, Martin, D-58239 Schwerte (DE)
(74) Vertreter: Haverkamp, Jens

(56) Entgegenhaltungen:
- DE-A1-102008 019 912
- FR-A1- 2 580 613
- US-A- 5 823 588

## Beschreibung

Die Erfindung betrifft eine Anschlagpunktabstützeinrichtung zum Abstützen eines Anschlagpunktes an der Oberfläche eines mit dem Anschlagpunkt handzuhabenden Gegenstandes, welcher Anschlagpunkt Anschlussmittel zum formschlüssigen Anschließen desselben an den Gegenstand aufweist.

Anschlagpunkte werden zum Handhaben von Gegenständen eingesetzt, wenn diese keine geeigneten Anschlusspunkte zum Anschließen von Hebe- oder Zurrmitteln aufweisen. Das Handhaben eines solchen Gegenstandes mit einem Anschlagpunkt betrifft ein Heben, ein Ziehen und/oder ein Festlegen desselben. Verwendet werden hierfür Hebe- oder Zurrmittel, beispielsweise Ketten, Gurte und dergleichen. Über den Anschlagpunkt wird somit auf den handzuhabenden Gegenstand eine Zuglast ausgeübt. Derartige Anschlagpunkte verfügen über Anschlussmittel, mit denen diese an den handzuhabenden Gegenstand angeschlossen werden können. Eingesetzt wird zu diesem Zweck ein von der Unterseite des Anschlagpunktes abragender Gewindezapfen, der in eine komplementäre Gewindebohrung des handzuhabenden Gegenstandes eingeschraubt wird. Ein solcher Anschlagpunkt verfügt des Weiteren über eine als Öse ausgebildete Aufnahme zum Anschließen eines Hebe- oder Zurrmittels, wie etwa eines Gurtes, eines Hakens oder dergleichen. Derartige Anschlagpunkte können starr ausgebildet sein, ohne dass die Anschlagöse drehbar gegenüber dem den Gewindezapfen tragenden Unterteil verstellbar ist. In einer anderen Ausgestaltung, die auch als Anschlagwirbel angesprochen wird, ist die Aufnahme zur Aufnahme des Hebe- oder Zurrmittels gegenüber dem Unterteil um die Längsachse des zum Festlegen vorgesehenen Gewindeschaftes drehbar.

Um eine bestimmungsgemäße Handhabung des Gegenstandes mittels eines oder mehrerer derartiger Anschlagpunkte zu gewährleisten, müssen diese an der Oberfläche des Gegenstandes verspannt sein. Zu diesem Zweck ist die Unterseite eines solchen Anschlagpunktes plan ausgebildet, um eine glatte Anlagefläche bereitzustellen. Aus DE 20 2005 019 355 U1 ist ein als Anschlagpunkt ausgebildeter Anschlagwirbel bekannt, in dessen zur Anlage an der Oberfläche des Gegenstandes vorgesehenen Fläche eine ringförmige Nut eingebracht ist, so dass die Abstützung der Unterseite des Anschlagpunktes an der Oberfläche des handzuhabenden Gegenstandes auf eine ringförmige Anlagefläche reduziert ist. Derartige Anschlagpunkte sind auch aus FR 2 580 613 A1 sowie DE 10 2008 019 912 A1 bekannt.

Aus US 5,823,588 A ist ein weiterer Anschlusspunkt bekannt. Dieser vorbekannte Anschlusspunkt umfasst einen aus einer oberen und einer unteren Gehäuseplatte gebildeten Fuß, wobei die Unterseite der untere Gehäuseplatte die Anlagefläche bildet, mit der dieser Anschlagpunkt an der Oberfläche des handzuhabenden Gegenstandes anliegt. Die untere Gehäuseplatte ist mittels einer Schraube an den handzuhabenden Gegenstand angeschlossen. Die obere Gehäuseplatte umfasst eine Kammer zur Aufnahme einer Scheibe, an die ein aus der oberen Gehäuseplatte herausragender Fortsatz angeformt ist, der wiederum einen Schäkel trägt. Die Scheibe ist mit ihrem Fortsatz und den daran angeschlossenen Schäkel innerhalb der oberen Gehäuseplatte drehbar. Die obere Gehäuseplatte ist mittels Schrauben an der unteren Gehäuseplatte befestigt. Diese Schrauben stützen sich nicht auf der Oberfläche des handzuhabenden Gegenstandes ab.

Auch wenn mit derartigen Anschlusspunkten Gegenstände in der gewünschten Art und Weise sicher gehandhabt werden können, war für eine solche sichere Handhabung regelmäßig Voraussetzung, dass der Anschlagpunkt bestimmungsgemäß an den Gegenstand angeschlossen ist, mithin bestimmungsgemäß gegenüber diesem verspannt ist. Laut DE 20 2005 019 355 U1 bedeutet dieses, dass die jeweils zur Verfügung gestellte Anlagefläche des Anschlagpunktes vollflächig und ohne Zwischenschaltung von Verunreinigungen, um eine Punktabstützung zu vermeiden, an der Oberfläche des handzuhabenden Gegenstandes anzuliegen hat. Nicht als Gegenstände zum Anschluss eines Anschlagpunktes eignen sich daher solche Gegenstände, bei denen der Bereich um eine ein Innengewinde tragende Anschlussbohrung nicht hinreichend groß ist, damit ein Anschlusspunkt plan mit seiner gesamten Anlagefläche anliegen und bestimmungsgemäß verspannt werden kann. Dieses ist beispielsweise bei hinsichtlich ihrer Oberfläche konturierten Gegenständen, etwa Karosseriebauteilen oder dergleichen, der Fall. Sollen derartige Gegenstände in der vorbeschriebenen Weise gehandhabt werden, ist es erforderlich, Hülsen oder dergleichen als Aufnahmen für Hebe- oder Zurrmittel daran anzuschweißen. Dieses wiederum ist in vielen Fällen nicht gewünscht, da nach einer Handhabung des Gegenstandes der Anschlusspunkt nicht in dem Gegenstand verbleiben soll.

Ausgehend von diesem diskutierten Stand der Technik liegt der Erfindung daher die Aufgabe zugrunde, einen Anschlagpunkt der eingangs genannten Art dergestalt weiterzubilden, dass dieser auch an Gegenstände mit einer Oberfläche angeschlossen werden kann, an die aufgrund der Oberflächenkontur herkömmliche lösbare Anschlagpunkte nicht angeschlossen werden können, wenn eine bestimmungsgemäße Handhabung des Gegenstandes gewährleistet werden soll.

Gelöst wird diese Aufgabe erfindungsgemäß durch eine eingangs genannte, gattungsgemäße Anschlagpunktabstützeinrichtung, bei der die Abstützeinrichtung zumindest drei mit radialem Abstand zu dem oder den Anschlussmitteln des Anschlagpunktes angeordnete Stützglieder umfasst, durch die die Abstützfläche bereitgestellt ist, mit der der Anschlagpunkt an der Oberfläche des Gegenstandes bei an den Gegenstand angeschlossenem Anschlagpunkt abgestützt ist, welche Stützglieder umfänglich bezüglich des oder der Anschlussmittel des Anschlagpunktes verteilt angeordnet sind und von denen zumindest eines in seiner wirksamen Abstützlänge gegenüber einem dieses Stützglied tragenden Stützgliedfortsatzes einrichtbar ist.

Diese Abstützeinrichtung zeichnet sich dadurch aus, dass die Anlagefläche an der Oberfläche des handzuhabenden Gegenstandes durch Stützglieder bereitgestellt wird, von denen zumindest eines, typischerweise jedoch alle hinsichtlich ihrer wirksamen Abstützlänge, vorzugsweise unabhängig voneinander einrichtbar sind. Sind mehrere bezüglich ihrer wirksamen Abstützlänge einrichtbare Stützglieder vorgesehen, sind diese unabhängig voneinander bezüglich ihrer wirksamen Abstützlänge einrichtbar. Bei dieser Abstützeinrichtung stellen die Stützglieder die Abstützfläche bereit, mit der der Anschlusspunkt an der Oberfläche eines handzuhabenden Gegenstandes abgestützt ist bzw. abgestützt werden kann. Infolge der individuellen Einrichtbarkeit der Stützglieder kann eine Abstützung auch an nicht planen Anlageflächen vorgenommen werden. Als Stützglieder können beispielsweise Spannschrauben eingesetzt werden, wobei jede Fußfläche sodann einen Teil der Anlagefläche der Abstützeinrichtung an der Oberfläche des handzuhabenden Gegenstandes darstellt. Hierbei kann es sich beispielsweise um den Fuß der Spannschraube als solchen oder um einen daran angeschlossenen Gelenkfuß mit einem gegenüber dem Durchmesser der Spannschraube größeren Durchmesser handeln. Die Stützglieder sind umfänglich in Bezug auf das oder die Anschlussmittel eines mittels einer solchen Anschlagpunktabstützeinrichtung an einen Gegenstand anzuschließenden Anschlagpunktes verteilt angeordnet, um eine umfängliche Abstützung an der Oberfläche eines handzuhabenden Gegenstandes im Bezug auf sein Anschlussmittel bereitzustellen. Grundsätzlich wird es als ausreichend angesehen, wenn die Abstützeinrichtung drei Stützglieder aufweist, die vorzugsweise mit gleichem Winkelabstand zueinander angeordnet sind. Bevorzugt ist jedoch eine Ausgestaltung, bei der fünf oder auch mehr Stützglieder, beispielsweise sechs, eingesetzt werden, und auf diese Weise die Stützfläche, mit der die Anschlagpunktabstützeinrichtung an der Oberfläche eines handzuhabenden Gegenstandes abstützbar ist, entsprechend größer ist. Auch wenn mehr als drei Stützglieder vorgesehen sind, sind diese vorzugsweise mit gleichem Winkelabstand zueinander angeordnet.

Der Anschlagpunkt durchgreift mit seinem beispielsweise als Gewindeschaft ausgebildeten Anschlussmittel die Anschlagpunktabstützeinrichtung und wird in einem solchen Fall in herkömmlicher Weise in eine komplementäre Innengewindebohrung des handzuhabenden Gegenstandes eingeschraubt. Auf diese Weise wird der formschlüssige Anschluss des Anschlagpunktes mit dem handzuhabenden Gegenstand, vor allem auch in Auszugsrichtung hergestellt. Zum Verspannen des Anschlagpunktes an dem handzuhabenden Gegenstand können unter Verwendung dieser Anschlagpunktabstützeinrichtung die Stützglieder hinsichtlich ihrer wirksamen Abstützlänge eingerichtet werden, so dass diese mit ihrer Anlagefläche gegen die Oberfläche des handzuhabenden Gegenstandes wirken. Ein Einrichten der wirksamen Abstützlänge des oder der Stützglieder erfolgt sodann in Abhängigkeit von der Oberflächenkonturierung des handzuhabenden Gegenstandes. Die Anpassung an eine bestimmte Oberflächenkontur, beispielsweise eine Aufwölbung, eine Kante oder dergleichen des Gegenstandes kann durch Einrichten einer unterschiedlich wirksamen Abstützlänge der einzelnen Stützglieder herbeigeführt werden. Typischerweise wird der Anschlagpunkt an der Oberfläche des anzuordnenden Gegenstandes nach Einrichten der Stützglieder durch Verspannen seines Gewindeschaftes in der komplementäre Gewindebohrung vorgenommen. Prinzipiell ist der Vorgang des Verspannens auch dadurch möglich, dass der Anschlagpunkt an dem handzuhabenden Gegenstand im Zuge des Einrichtens der wirksamen Abstützlänge des oder der diesbezüglich einrichtbaren Stützglieder an der Oberfläche des handzuhabenden Gegenstandes verspannt wird.

Vor dem Hintergrund, dass die Stützglieder hinsichtlich ihrer wirksamen Abstützlänge einrichtbar sind, ist es grundsätzlich nicht erforderlich, dass das Anschlussmittel des Anschlagpunktes bzgl. seines Anschlusses an den Gegenstand einrichtbar ist. Somit ist es mit einer Anschlagpunktanschlusseinrichtung, wie vorstehend beschrieben, auch möglich diese an einen handzuhabenden Gegenstand anzuschließen, wenn als Anschlussmittel ein beispielsweise hakenförmiges Anschlusselement vorgesehen ist, welches in eine hinterschnittene Bohrung des Gegenstandes eingreift und darin gehalten ist, da die Verspannung durch die Einrichtung der Stützglieder herbeigeführt wird.

Die Anschlagpunktabstützeinrichtung trägt ihre Abstützglieder in einem radialen Abstand zu dem oder den Anschlussmitteln des Anschlagpunktes. Diesbezüglich ist von Interesse, dass dieser radiale Abstand größer bemessen sein kann als der Durchmesser der Anlageflächen herkömmlicher Abstützpunkte. Hierdurch wird aufgrund des dadurch längeren Hebels die Oberflächenbelastung des handzuhabenden Gegenstandes verringert. Zugleich wird durch diese individuelle Einrichtung der Abstützanordnung in Anpassung an die jeweilige Konturierung eines handzuhabenden Gegenstandes die Gefahr verringert, dass zwischen den Stützgliedern und der Oberfläche des handzuhabenden Gegenstandes befindliche Verunreinigungen die gewünschte Verspannung beeinträchtigen. Sollten tatsächlich zwischen der Anlagefläche eines Stützgliedes und der Oberfläche des handzuhabenden Gegenstandes Verunreinigungen vorhanden sein, ist hierdurch nur die Abstützung dieses einen Stützgliedes beeinträchtigt, nicht jedoch diejenige der anderen Stützglieder. Bei hinreichender Anzahl an Stützgliedern führt dieses nicht zu einer nennenswerten Beeinträchtigung in der Handhabungssicherheit.

Die Stützglieder sind in Stützgliedfortsätzen der Abstützeinrichtung gehalten. Dabei bietet es sich an, bei Vorsehen mehrerer Stützglieder die Stützgliedfortsätze der einzelnen Stützglieder miteinander zu vereinen und auf diese Weise einen umfänglich umlaufenden Stützgliedteller auszubilden. Dieses ist in einem bevorzugten Ausführungsbeispiel vorgesehen, bei dem fünf oder sechs Stützglieder Teil der Abstützeinrichtung sind.

Eine solche Anschlagpunktabstützeinrichtung kann unverlierbar an einen Anschlagpunkt angeschlossen oder Teil eines solchen Anschlagpunktes sein. In letzterem Fall ist die Abstützeinrichtung starrer Bestandteil des Anschlagpunktes. In ersterem Fall besteht die Möglichkeit, die Abstützeinrichtung gegenüber dem Anschlagpunkt gelenkig vorzusehen, beispielsweise drehbar oder um einen gewissen Betrag kugelgelenkartig verschwenkbar.

Von Besonderheit bei dieser Anschlagpunktabstützeinrichtung ist, dass sich diese auch zum Anschließen von herkömmlichen Anschlagpunkten an einen handzuhabenden Gegenstand eignet. Die Anlagefläche eines solchen Anschlagpunktes stützt sich sodann auf einer komplementären Fläche der Abstützeinrichtung ab, so dass zum Anschluss an einen handzuhabenden Gegenstand der Anschlusspunkt über die Stützflächen der Stützglieder an der Oberfläche des handzuhabenden Gegenstandes abgestützt ist, während sein Gewindezapfen in die komplementäre Gewindebohrung des Gegenstandes zur Bereitstellung des notwendigen Widerlagers für das nachfolgende Spannen eingreift. Somit kann beispielsweise mit dieser Anschlagpunktabstützeinrichtung ein herkömmlicher Anschlagpunkt auch an eine beispielsweise domförmige Erhebung eines handzuhabenden Gegenstandes angeschlossen werden, da die Abstützung des Anschlagpunktes auf der Oberfläche des handzuhabenden Gegenstandes über die hinsichtlich ihrer wirksamen Abstützlänge einrichtbaren Stützglieder erfolgt. Ohne eine solche Abstützeinrichtung ist ein Anschluss eines herkömmlichen Anschlagwirbels an einer solchen Position eines handzuhabenden Gegenstandes nicht möglich, da ein Verspannen mit der gewünschten Spannfläche nicht herbeizuführen war.

Ein bevorzugtes Ausführungsbeispiel ist, dass die Anschlagpunktabstützeinrichtung Teil eines Anschlagpunktes ist und aus diesem Grunde nicht gesondert gehandhabt werden muss. Der Anschlagpunkt selbst kann als Anschlagwirbel ausgebildet sein. Bei einer solchen Ausgestaltung ist in einer Weiterbildung vorgesehen, dass der Anschlagpunkt und die Abstützeinrichtung kugelgelenkartig um einen bestimmten Betrag gegeneinander verschwenkbar sind, beispielsweise um 20 Grad. Dies ermöglicht eine Ausrichtung der Aufnahme, also beispielsweise der Öse, des Anschlusspunktes in Richtung der anzulegenden Zuglast, wenn diese nicht lotrecht zur Oberfläche des handzuhabenden Gegenstandes anliegt und somit ein Verspannen des Anschlusspunktes an der Oberfläche des Gegenstandes ebenfalls nicht lotrecht zur anzulegenden Zugkraft möglich ist.

Nachfolgend ist die Erfindung anhand eines Ausführungsbeispiels unter Bezugnahme auf die beigefügten Figuren beschrieben. Es zeigen:
- **Fig. 1:**: eine perspektivische Ansicht eines Anschlagpunktes mit einer Anschlagpunktabstützeinrichtung,
- **Fig. 2:**: eine zum Teil geschnittene Seitenansicht des Anschlagpunktes der Figur 1 in einer ersten Stellung gegenüber seiner Abstützeinrichtung,
- **Fig. 3:**: der Anschlagpunkt der Figur 2 in einer weiteren Seitenansicht in einer Schwenkstellung gegenüber einer Abstützeinrichtung und
- **Fig. 4:**: der Anschlagpunkt der vorangegangenen Figuren in einer Seitenansicht entsprechend derjenigen der Figur 2, angeschlossen an ein mit dem Anschlagpunkt handzuhabenden Gegenstand.

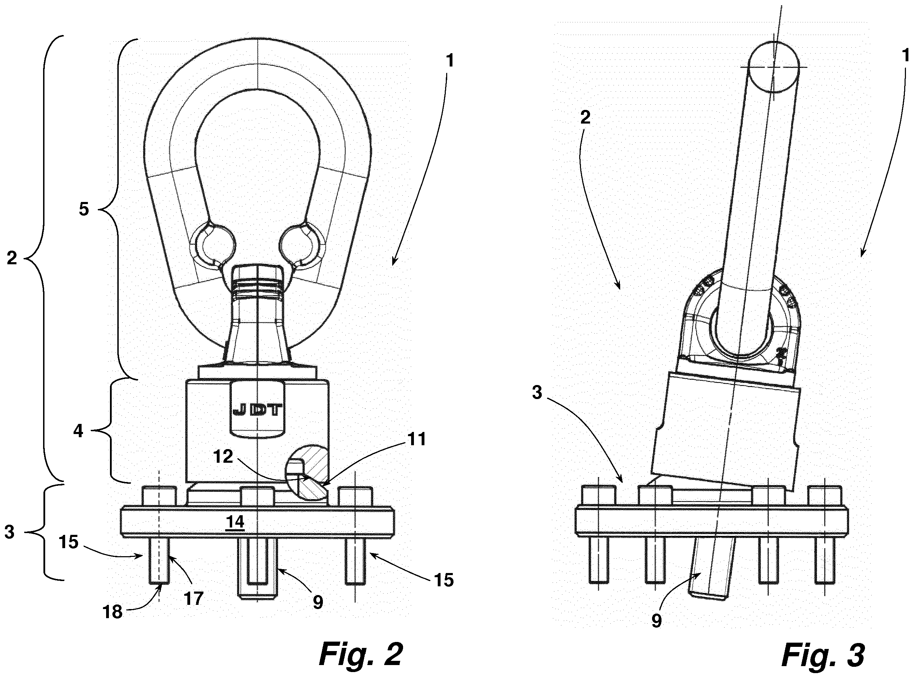

Ein Anschlagpunkt 1 umfasst ein Wirbelteil 2 und eine Anschlagpunktabstützeinrichtung 3. Bei dem in den Figuren dargestellten Ausführungsbeispiel ist die Anschlagpunktabstützeinrichtung 3 unverlierbar an das Wirbelteil 2 angeschlossen. Das Wirbelteil 2 ist bei dem dargestellten Ausführungsbeispiel nach Art eines herkömmlichen Anschlagwirbels konzipiert und umfasst ein zylindrisches Unterteil 4 und ein darin drehbar um die Längsachse des Unterteils 4 gelagertes Oberteil 5. Angeschlossen an das Obertei 5l ist eine Öse 6 zum Anschluss eines Hebe- oder Zurrmittels, wie beispielsweise eines Hakens. Die Öse 6 ist in einer Ösenhalterung 7 aufgenommen und in dieser um eine horizontale Achse verschwenkbar. In die Mantelfläche des Unterteils 4 sind Werkzeugangriffskonturen 8 eingebracht, um einen dem Unterteil 5 zugeordneten Gewindeschaft 9 (siehe Figur 2) in eine komplementäre Innengewindebohrung eines mit dem Anschlagpunkt 1 handzuhabenden Gegenstandes einschrauben zu können.

Die Unterseite 9 des Unterteils 4 ist auf einer auf der Oberseite der Abstützeinrichtung 3 angeordneten Gelenkfläche 10 abgestützt. Die Gelenkfläche 10 ist, wie aus Figur 2 erkennbar, nach Art eines Segmentes eines Kugelgelenkes ausgeführt. Der sich darauf abstützende Flächenanteil 15 der Unterseite 10 des Unterteils 4 ist komplementär ausgeführt. Aufgrund dieser Abstützung ist das Unterteil 4 gegenüber der Abstützeinrichtung 3 kugelgelenkartig um einen gewissen Betrag verschwenkbar. Das dargestellte Ausführungsbeispiel zeigt den Anschlagpunkt 1 mit einem Verschwenkbetrag des Wirbelteils 2 gegenüber der Abstützeinrichtung 3 um etwa 7 Grad verstellt (s. Figur 3).

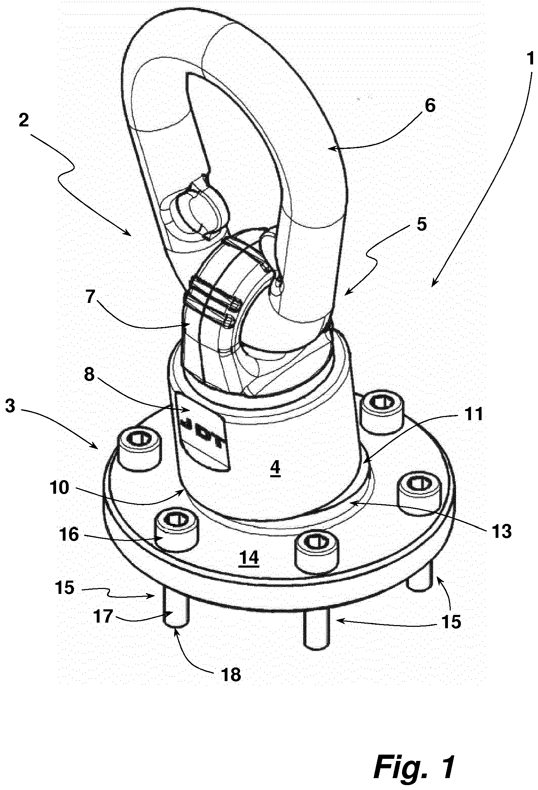

Die Anschlagpunktabstützeinrichtung 3 umfasst einen in radialer Richtung an die Gelenkfläche 11 unter Zwischenschaltung eines Absatzes 13 angeformten Stützgliedteller 14. Dieser kragt über den radialen Abschluss des Unterteils 4 des Wirbelteils 2 aus. Der Stützgliedteller 14 trägt mehrere Stützglieder 15, wobei bei dem dargestellten Ausführungsbeispiel sechs Stützglieder 15 vorgesehen sind. Bei den Stützgliedern 15 handelt es sich bei dem dargestellten Ausführungsbeispiel um Spannschrauben. Die Figuren 1 bis 3 zeigen die als Spannschrauben ausgeführten Stützglieder 15 in einer Stellung derselben, bei denen die Unterseite des jeweiligen Schraubenkopfes 16 auf der Oberseite des Stützgliedtellers 14 aufliegt. Die Gewindeschäfte 17 der Stützglieder 15 kämmen komplementäre Innengewindebohrungen des Stützgliedtellers 14, so dass die Länge des jeweiligen Gewindeschaftes 17 eines Stützgliedes 15 eingerichtet werden kann. In der in den Figuren 1 bis 3 gezeigten Stellung der Stützglieder ist somit die maximal einrichtbare wirksame Abstützlänge der Gewindeschäfte 17 gezeigt. Diese in den Figuren 1 bis 3 gezeigte Länge ist durch Drehen der Stützglieder einrichtbar. Die Stützglieder 15 können individuell und unabhängig voneinander eingerichtet werden.

Die Fußflächen 18 der Stützglieder 15 dienen zum Abstützen an der Oberfläche eines mit dem Anschlagpunkt 1 handzuhabenden Gegenstandes.

Die Kippmöglichkeit des Winkelteils 2 gegenüber der Abstützeinrichtung 3 dient dem Zweck, dass der Anschlagpunkt 1 an handzuhabende Gegenstände angeschlossen werden kann, bei denen die Innengewindebohrung zur Aufnahme des Gewindeschaftes 9 des Unterteils 4 nicht lotrecht zu dem vorgesehenen Zuglastangriff ausgebildet ist.

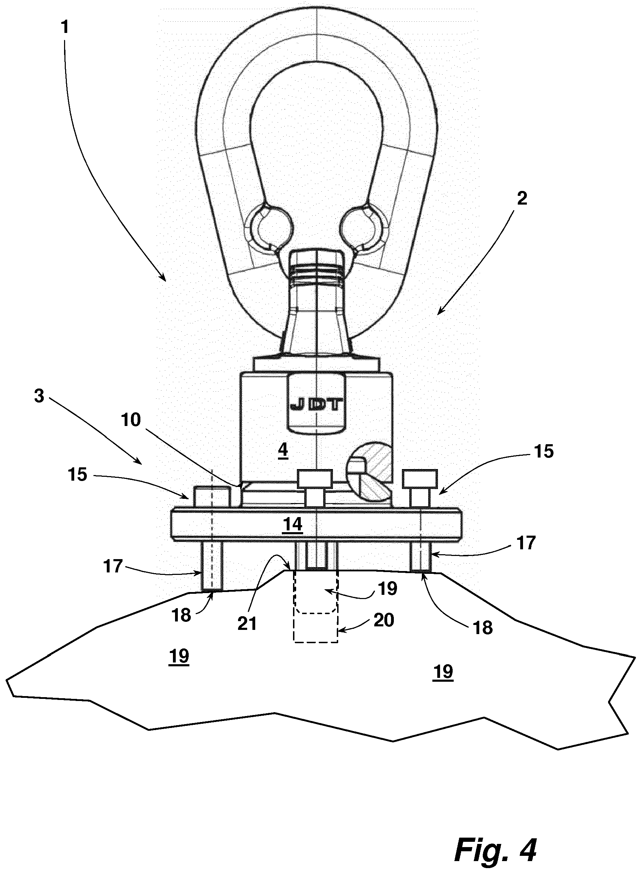

Der Anschlagpunkt 1 kann an handzuhabende Gegenstände angeschlossen werden, die nur eine begrenzte plane Anlagefläche (wenn überhaupt vorhanden) aufweisen. Ein solches Beispiel ist in Figur 4 gezeigt. In der in Figur 4 gezeigten Situation ist der Anschlagpunkt 1 an einen handzuhabenden Gegenstand 19 angeschlossen. Die in den Gegenstand 19 eingebrachte Innengewindebohrung 20 zur Aufnahme des Gewindeschaftes 19 des Anschlagpunktes 1 befindet sich an einer Stelle des Gegenstandes 19, in dem keine hinreichende Anlagefläche für die bestimmungsgemäße Abstützung eines herkömmlichen Anschlagpunktes gegeben ist. Die diesbezügliche Fläche ist in Figur 4 mit dem Bezugszeichen 21 kenntlich gemacht. Somit kann an den Gegenstand 19 in bestimmungsgemäßer Art und Weise, gemäß der der Anschlagpunkt mit seiner Anlagefläche vollflächig an der Oberfläche des Gegenstandes anliegt, ein herkömmlicher Anschlagpunkt nicht angeschlossen werden. Erkennbar würde die Unterseite 10 des Unterteils 4 des Anschlagpunktes 1 nicht vollflächig auf der Fläche 21 aufliegen.

Der Anschlagpunkt 1 kann jedoch unter Zwischenschaltung der Anschlagabstützeinrichtung 3 an den Gegenstand 19 angeschlossen werden. Zum Anschließen des Anschlagpunktes 1 sind die Stützglieder 15 mit ihren Gewindeschäften 17 zunächst auf eine nur geringe wirksame Abstützlänge oder keine Abstützlänge eingestellt. Anschließend wird der Gewindeschaft 9 des Anschlagpunktes 1 in die für den Anschluss des Anschlusspunktes 1 vorgesehene Innengewindebohrung 20 des Gegenstandes 19 eingeschraubt. Zu diesem Zweck verfügt die Abstützeinrichtung 3 über einen Durchbruch, durch den der an das Unterteil 4 des Wirbelteils 2 angeformte Gewindeschaft 9 hindurchgreift. Dieses Einschrauben dient zum formschlüssigen Anschließen des Anschlagpunktes 1 in Richtung der Längserstreckung der Innengewindebohrung 20 an den Gegenstand 19 zum Bereitstellen eines Spannwiderlagers. Anschließend werden die Stützglieder 15 hinsichtlich ihrer wirksamen Länge eingerichtet, dass sich diese mit ihrem Fuße an der Oberfläche des Gegenstandes 19 abstützen. Die wirksame Abstützlänge wird eingerichtet durch entsprechendes Einschrauben der Stützglieder 15, bis die jeweilige Fußfläche 18 an der Oberfläche des Gegenstandes 19 zur Anlage kommt. Insofern erfolgt eine Abstützung des Anschlagpunktes 1 mit der Summe der Fußflächen 18 der Stützglieder 15. Anschließend wird mit einem an der Werkzeugangriffskontur 8 angesetzten Werkzeug der Gewindeschaft 9 in der Innengewindebohrung 20 verspannt. Dieses Spannen erfolgt mit einem vorgegebenen Drehmoment.

Infolge der individuellen Einrichtbarkeit der Stützglieder 15 kann die wirksame Abstützlänge jedes Stützgliedes 15 an die Oberflächenkonturierung des Gegenstandes 19 angepasst werden. Wie aus Figur 4 ersichtlich, erfolgt die Abstützung zudem in einem gegenüber herkömmlichen Anschlagpunkten relativ großen Abstand zur Längsachse des Gewindeschaftes 9. Dadurch ist der durch einen Querlastangriff auf die Abstützung wirkende Hebelarm hinsichtlich seines Längenverhältnisses reduziert, so dass die auf die in dieser Zugrichtung befindlichen Fußflächen 18 auf die Oberfläche des Gegenstandes 19 wirkende Kraft entsprechend geringer ist. Dieser Umstand wird bei dem Anschlagpunkt 1 und seiner Abstützeinrichtung 3 in geschickter Weise genutzt, da die wirksame Abstützfläche entsprechend kleiner gehalten werden kann und somit die Abstützung über die Fußflächen 18 von Spannschrauben ausreicht, um eine bestimmungsgemäße Verspannung an dem handzuhabenden Gegenstand 19 zu bewirken.

Bei dem dargestellten Ausführungsbeispiel stützen sich die Fußflächen 18 der Gewindeschäfte 17 der Stützglieder 15 unmittelbar an der Oberfläche des Gegenstandes 19 ab. In einem anderen Ausführungsbeispiel einer Ausführung der Stützglieder ist vorgesehen, dass diese fußseitig einen Stützteller tragen, der vorzugsweise um einen bestimmten Betrag kugelgelenkartig gegenüber dem Gewindeschaft 17 verschwenkbar ist.

Bei dem beschriebenen Ausführungsbeispiel ist die Anschlagpunktabstützeinrichtung 3 unverlierbar an das Wirbelteil 2 angeschlossen. Ohne Weiteres kann eine Anschlagpunktabstützeinrichtung anstelle der Gelenkfläche 11 eine plane Anlagefläche aufweisen und in Verbindung mit einem herkömmlichen Anschlagpunkt, beispielsweise auch als Anschlagwirbel ausgeführt, eingesetzt werden, um die vorbeschriebenen Vorteile zu erzielen. Bei einer solchen Verwendung ist die Anschlagpunktabstützeinrichtung schlichtweg zwischen den Anschlagpunkt und die Oberfläche des handzuhabenden Gegenstandes eingeschaltet.

Die Erfindung ist anhand eines Ausführungsbeispiels unter Bezugnahme auf die beigefügten Figuren beschrieben. Ohne den Umfang der geltenden Ansprüche zu verlassen, ergeben sich für einen Fachmann zahlreiche weitere Möglichkeiten, die Erfindung umsetzen zu können.

### Bezugszeichenliste

- 1: Anschlagpunkt
- 2: Wirbelteil
- 3: Anschlagpunktabstützeinrichtung
- 4: Unterteil
- 5: Oberteil
- 6: Öse
- 7: Ösenhalterung
- 8: Werkzeugangriffskontur
- 9: Gewindeschaft
- 10: Unterseite
- 11: Gelenkfläche
- 12: Flächenanteil
- 13: Absatz
- 14: Stützgliedteller
- 15: Stützglied
- 16: Schraubenkopf
- 17: Gewindeschaft
- 18: Fußfläche
- 19: Gegenstand
- 20: Innengewindebohrung
- 21: Fläche

## Patentansprüche

1. Anschlagpunkt und Anschlagpunktabstützeinrichtung zum Abstützen des Anschlagpunktes (1) an der Oberfläche eines mit dem Anschlagpunkt (1) handzuhabenden Gegenstandes (19), welcher Anschlagpunkt (1) Anschlussmittel (9) zum formschlüssigen Anschließen desselben an den Gegenstand (19) aufweist, **dadurch gekennzeichnet, dass** die Abstützeinrichtung (3) zumindest drei mit radialem Abstand zu dem oder den Anschlussmitteln (9) des Anschlagpunktes (1) angeordnete Stützglieder (15) umfasst, durch die die Abstützfläche bereitgestellt ist, mit der der Anschlagpunkt (1) an der Oberfläche des Gegenstandes (19) bei an den Gegenstand (19) angeschlossenem Anschlagpunkt (1) abgestützt ist, welche Stützglieder (15) umfänglich bezüglich des oder der Anschlussmittel (9) des Anschlagpunktes (1) verteilt angeordnet sind und von denen zumindest eines in seiner wirksamen Abstützlänge gegenüber einem dieses Stützglied (15) tragenden Stützgliedfortsatzes einrichtbar ist.

2. Abstützeinrichtung nach Anspruch 1, **dadurch gekennzeichnet, dass** die Stützglieder (15) mit gleichem Winkelabstand zueinander angeordnet sind.

3. Abstützeinrichtung nach Anspruch 1 oder 2, **dadurch gekennzeichnet, dass** mehrere Stützglieder (15) hinsichtlich ihrer wirksamen Abstützlänge einrichtbar sind, wobei diese Stützglieder (15) unabhängig voneinander bzgl. ihrer wirksamen Abstützlänge eingerichtet werden können.

4. Abstützeinrichtung nach einem der Ansprüche 1 bis 3, **dadurch gekennzeichnet, dass** die Abstützeinrichtung (3) zumindest fünf Stützglieder (15) aufweist.

5. Abstützeinrichtung nach einem der Ansprüche 1 bis 4, **dadurch gekennzeichnet, dass** alle Stützglieder (15) hinsichtlich ihrer wirksamen Abstützlänge einrichtbar sind.

6. Abstützeinrichtung nach einem der Ansprüche 1 bis 5, **dadurch gekennzeichnet, dass** die Stützglieder (15) als Stützschrauben mit jeweils einer Antriebskontur zum Einrichten ihrer wirksamen Abstützlänge ausgeführt sind.

7. Abstützeinrichtung nach einem der Ansprüche 1 bis 6, **dadurch gekennzeichnet, dass** die Stützgliedfortsätze der einzelnen Stützglieder (15) in Umfangsrichtung gesehen zu einem Stützgliedteller (14) zusammengeführt sind.

8. Abstützeinrichtung nach einem der Ansprüche 1 bis 7, **dadurch gekennzeichnet, dass** die Abstützeinrichtung (3) gegenüber der Längsachse des oder der Anschlussmittel (9) des Anschlagpunktes (1) kugelgelenkartig um einen bestimmten Betrag verschwenkbar ist.

9. Abstützeinrichtung nach Anspruch 8, **dadurch gekennzeichnet, dass** die Abstützeinrichtung (3) einen Gelenkkopf und der mit der Abstützeinrichtung (3) zusammenwirkende Anschlagpunkt an seiner das oder die Anschlussmittel (9) tragenden Seite eine Gelenkpfanne aufweisen.

10. Abstützeinrichtung nach einem der Ansprüche 1 bis 9, **dadurch gekennzeichnet, dass** die Abstützeinrichtung (3) eine Durchbrechung zum Durchführen des oder der Anschlussmittel (9) des Anschlagpunktes aufweist.

11. Abstützeinrichtung nach einem der Ansprüche 1 bis 10, **dadurch gekennzeichnet, dass** die Abstützeinrichtung (3) an einen Anschlagpunkt (1) unverlierbar angeschlossen oder Teil eines Anschlagpunktes ist.

12. Abstützeinrichtung nach Anspruch 11, **dadurch gekennzeichnet, dass** das oder die Anschlussmittel (9) des Anschlagpunktes (1) eine größere Eingriffslänge aufweisen als die maximal einstellbare wirksame Abstützlänge der Stützglieder (15).

13. Abstützeinrichtung nach Anspruch 11 oder 12, **dadurch gekennzeichnet, dass** das Anschlussmittel (9) des Anschlagpunktes (1) als Gewindeschaft ausgeführt ist.

14. Anordnung umfassend einen Anschlagpunkt (1) und eine Anschlagpunktabstützeinrichtung nach einem der Ansprüche 1 bis 13 sowie einen damit handzuhabenden Gegenstand (19).

## Claims

1. Contact point and contact point support device for supporting the contact point (1) on the surface of an object (19) which is to be handled by the contact point (1), said contact point (1) comprising connecting means (9) for the positive fit connection thereof to the object (19), **characterised in that** the support device (3) comprises at least three support members (15) arranged at a radial distance interval from the connecting means (9) of the contact point (1), by means of which the support surface is provided with which the contact point (1) is supported on the surface of the object (19), when the contact point (1) is connected to the object (19), said support members (15) being arranged distributed circumferentially in relation to the connecting means (9) of the contact point (1) and of which at least one support member extension can be adjusted, which in its effective support length carries one of these support members (15).

2. Support device according to claim 1, **characterised in that** the support members (15) are arranged with the same angular distance to one another.

3. Support device according to claim 1 or 2, **characterised in that** a plurality of support members (15) can be adjusted in respect of their effective support length, wherein these support members (15) can be adjusted independently of one another in respect of their effective support length.

4. Support device according to any one of claims 1 to 3, **characterised in that** the support device (3) comprises at least five support members (15).

5. Support device according to any one of claims 1 to 4, **characterised in that** all the support members (15) can be adjusted in respect of their effective support length.

6. Support device according to any one of claims 1 to 5, **characterised in that** the support members (15) are configured as support screws, with in each case a drive contour for the adjusting of their effective support length.

7. Support device according to any one of claims 1 to 6, **characterised in that** the support member extensions of the individual support members (15) are merged together, seen in the circumferential direction, to form a support member plate (14).

8. Support device according to any one of claims 1 to 7, **characterised in that** the support device (3) can be pivoted by a specific amount in relation to the longitudinal axis of the connecting means (9) of the contact point (1) in the form of a ball joint.

9. Support device according to claim 8, **characterised in that** the support device (3) comprises a joint head, and the contact point interacting with the support device (3) comprises a joint socket on its side carrying the connecting means (9).

10. Support device according to any one of claims 1 to 9, **characterised in that** the support device (3) exhibits a passage opening for passing through the connecting means (9) of the contact point.

11. Support device according to any one of claims 1 to 10, **characterised in that** the support device (3) is connected to a contact point (1) in a captive manner, or is a part of a contact point.

12. Support device according to claim 11, **characterised in that** the connecting means (9) of the contact point (1) exhibit a greater engagement length than the maximum adjustable effective support length of the support members (15).

13. Support device according to claims 11 or 12, **characterised in that** the connecting means (9) of the contact point (1) is configured as a threaded shaft.

14. Arrangement comprising a contact point (1) and a contact point support device according to any one of claims 1 to 13, as well as an object (19) which is to be handled by means of these.

## Revendications

1. Point de butée et système d'étayage pour l'appui du point de butée (1) à la surface d'un objet (19) à manipuler avec le point de butée (1), lequel point de butée (1) présente des moyens de raccordement (9) afin de réaliser son raccordement par complémentarité de forme à l'objet (19), **caractérisé en ce que** le système d'étayage (3) comprend au moins trois éléments d'appui (15) disposés avec un écartement radial par rapport au ou aux moyens de raccordement (9) du point de butée (1) par lesquels est mise à disposition la surface d'appui, par laquelle le point de butée (1) est en appui sur la surface de l'objet (19) lorsque le point de butée (1) est raccordé à l'objet (19), lesquels éléments d'appui (15) sont disposés répartis en circonférence par rapport au ou aux moyens de raccordement (9) du point de butée (1) et parmi lesquels au moins un est ajustable au niveau de la longueur d'appui effective par rapport à un prolongement d'appui supportant cet élément d'appui (15)

2. Système d'étayage selon la revendication 1, **caractérisé en ce que** les éléments d'appui (15) sont disposés les uns par rapport aux autres selon un même écart angulaire.

3. Système d'étayage selon la revendication 1 ou 2, **caractérisé en ce que** plusieurs éléments d'appui (15) sont ajustables au niveau de leur longueur d'appui effective, lesquels éléments d'appui (15) pouvant être ajustés indépendamment les uns des autres au niveau de leur longueur d'appui effective.

4. Système d'étayage selon l'une des revendications 1 à 3, **caractérisé en ce que** le système d'étayage (3) présente au moins cinq éléments d'appui (15).

5. Système d'étayage selon l'une des revendications 1 à 4, **caractérisé en ce que** tous les éléments d'appui (15) sont ajustables au niveau de leur longueur d'appui effective.

6. Système d'étayage selon l'une des revendications 1 à 5, **caractérisé en ce que** les éléments d'appui (15) sont conformés en vis d'appui présentant chacune un contour d'entraînement destiné à obtenir leur longueur d'appui effective.

7. Système d'étayage selon l'une des revendications 1 à 6, **caractérisé en ce que** les prolongements d'appui de chaque élément d'appui (15) sont conformés, considérés dans le sens circonférentiel, pour se rejoindre en une assise d'appui (14).

8. Système d'étayage selon l'une des revendications 1 à 7, **caractérisé en ce que** le système d'étayage (3) est pivotant dans une certaine proportion, à la manière d'une articulation à rotule, par rapport à l'axe longitudinal du ou des moyens de raccordement (9) du point de butée (1).

9. Système d'étayage selon la revendication 8, **caractérisé en ce que** le système d'étayage (3) présente une tête articulée et que le point de butée agissant conjointement avec le système d'étayage (3) présente, sur son côté supportant le ou les moyens de raccordement (9), une cavité articulaire.

10. Système d'étayage selon l'une des revendications 1 à 9, **caractérisé en ce que** le système d'étayage (3) présente une traversée destinée à faire passer le ou les moyens de raccordement (9) du point de butée.

11. Système d'étayage selon l'une des revendications 1 à 10, **caractérisé en ce que** le système d'étayage (3) est raccordé de manière à ne pas pouvoir se détacher à un point de butée (1) ou fait partie d'un point de butée.

12. Système d'étayage selon la revendication 11, **caractérisé en ce que** le ou les moyens de raccordement (9) du point de butée (1) présentent une longueur d'engagement plus grande que la longueur d'appui effective maximale réglable des éléments d'appui (15).

13. Système d'étayage selon la revendication 11 ou 12, **caractérisé en ce que** le moyen de raccordement (9) du point de butée (1) est conformé en tige filetée.

14. Dispositif comportant un point de butée (1) et un système d'étayage d'un point de butée selon l'une des revendications 1 à 13 ainsi qu'un objet (9) à manipuler à l'aide de celui-ci.
